# EUROPÄISCHE PATENTSCHRIFT

(11) **EP 2 490 939 B1**
(45) Veröffentlichungstag und Bekanntmachung des Hinweises auf die Patenterteilung: **11.09.2019**
(21) Anmeldenummer: 10768736.0
(22) Anmeldetag: 13.10.2010
(51) Int. Cl.: B64D 45/00, H04N 7/18, B64D 47/02, B64D 11/00

(54) **STEUERVORRICHTUNG FÜR EINE KABINE EINES LUFT- ODER RAUMFAHRZEUGES, KABINENMANAGEMENTSYSTEM UND VERFAHREN ZUM STEUERN EINER KABINE EINES LUFT- ODER RAUMFAHRZEUGES**
CONTROL DEVICE FOR A CABIN OF AN AIRCRAFT OR SPACECRAFT, CABIN MANAGEMENT SYSTEM, AND METHOD FOR CONTROLLING A CABIN OF AN AIRCRAFT OR SPACECRAFT
DISPOSITIF DE COMMANDE POUR UNE CABINE D'UN ENGIN AÉRIEN OU SPATIAL, SYSTÈME DE GESTION DE CABINE ET PROCÉDÉ DE COMMANDE D'UNE CABINE D'UN ENGIN AÉRIEN OU SPATIAL

(30) Priorität: 20.10.2009 DE 102009045837; 20.10.2009 US 253502 P
(43) Veröffentlichungstag der Anmeldung: 29.08.2012
(73) Patentinhaber: Airbus Operations GmbH, 21129 Hamburg (DE)
(72) Erfinder: BERKHAHN, Sven-Olaf, 21129 Hamburg (DE); VOGEL, Carsten, 21129 Hamburg (DE); SCHULZ, Stefan, 21129 Hamburg (DE)
(74) Vertreter: Isarpatent
(86) Internationale Anmeldenummer: PCT/EP2010/065354
(87) Internationale Veröffentlichungsnummer: WO 2011/047998

(56) Entgegenhaltungen:
- EP-A1- 2 107 419
- WO-A1-2005/107239
- DE-A1- 4 011 842
- DE-A1-102007 051 196
- US-A1- 2007 085 912

## Beschreibung

Die vorliegende Erfindung bezieht sich auf eine Steuervorrichtung für eine Kabine eines Luft- oder Raumfahrzeuges, auf ein Kabinenmanagementsystem und auf ein Verfahren zum Steuern einer Kabine eines Luft- oder Raumfahrzeuges.

Obwohl auf beliebige Luft- oder Raumfahrzeuge anwendbar, werden die vorliegende Erfindung sowie die ihr zugrundeliegende Problematik in Bezug auf Passagierflugzeuge näher erläutert.

In einer herkömmlichen Flugzeugkabine existieren eine Mehrzahl von Kameras und Beleuchtungseinrichtungen, wie Leuchtdioden oder Leuchtstoffröhren. Die Kameras sind beispielsweise einem Kabinenüberwachungssystem (Cabin Video Monitoring System; CVMS) oder einem Cockpittür-Kontrollsystem (Cockpit Door Surveillance System; CDSS) zugeordnet, welche die Funktion erfüllen, die Kabine und den Bereich der Cockpittüre mittels der Kameras zu überwachen. Der durch die Kameras aufgenommene Video-Datenstrom wird den Flugbegleitern auf einem Flugbegleiterendgerät (Flight Attendance Panel; FAP) bereitgestellt. Des Weiteren kann der aufgenommene Videodatenstrom auch auf einem Cockpit-Display dargestellt werden.

Die Anmelderin hat festgestellt, dass Störungen, wie Interferenzen oder Alias-Effekte, bei dem aufgenommenen Videostrom vorkommen.

Die durch die Kameras abgetasteten Video-Datenströme beinhalten diese Störungen aufgrund der Pulsweitenmodulation der Beleuchtungseinrichtungen der Flugzeugkabine.

In der A 350 wurde die Steuerung des CDSS und des CVMS erstmals in das Kabinen-Managementsystem, das so genannten Cabin Intercommunication Data System (CIDS), integriert. Des Weiteren hostet das CIDS auch die Steuerung der Beleuchtung der Flugzeugkabine.

In der A 380 sind die Steuerung der CVMS/CDSS und der Kabinenbeleuchtung getrennte Systeme, so dass eine durch eine Ansteuerung der Beleuchtungseinrichtung verursachte Störung, wie beispielsweise Interferenz oder Alias-Effekte, bei einer Aufnahme der jeweiligen Kamera nicht vermieden werden können. Die Druckschrift DE 40 11 842 A1 offenbart eine Beleuchtungseinrichtung für Objekte, die von einer Kamera mit einem CCD-Bildaufnehmer aufgenommen werden. Die Beleuchtungseinrichtung wird von einer Steuereinheit im Pulsbetrieb angesteuert, durch den ein Stroboskop-Effekt erzielt wird. Die Beleuchtungseinrichtung umfasst eine Lichtquelle mit einem Leuchtdioden-Array im nahen InfrarotBereich, dessen Dioden selektiv von der Steuereinheit mit wenigstens einem Impuls variabler Breite während jeder Bildperiode beaufschlagt werden. Durch diese Ausbildung wird eine Beleuchtungseinrichtung bereitgestellt, welche die Vorteile von Stroboskopen aufweist, ohne dass diese deren Nachteilen oder den Nachteilen von konventionellen, sichtbaren Beleuchtungen unterliegt.

Die Druckschrift EP 2 107 419 A1 offenbart eine Beleuchtungsvorrichtung, bei der die Pulsfrequenz einer LED Beleuchtung an die variable Abtastrate einer Kamera angepasst wird.

Demnach ist es eine Aufgabe der vorliegenden Erfindung, die vorgenannten Nachteile zu beseitigen oder zumindest zu verringern.

Erfindungsgemäß wird diese Aufgabe durch eine Vorrichtung mit den Merkmalen des Patentanspruchs 1 und durch ein Verfahren mit den Merkmalen des Patentanspruchs 13 gelöst.

Demgemäß wird eine Steuervorrichtung für eine Kabine eines Luft- oder Raumfahrzeuges vorgeschlagen, mit einem ersten Steuermittel, welches dazu eingerichtet ist, zumindest ein erstes Steuersignal zum Ansteuern zumindest einer Kamera der Kabine zur Einstellung einer Abtastrate der zumindest einen Kamera bereitzustellen, und einem zweiten Steuermittel, welches dazu eingerichtet ist, zumindest ein zweites Steuersignal zum Ansteuern zumindest einer Beleuchtungseinrichtung der Kabine zur Einstellung einer Pulsweitenmodulation der zumindest einen Beleuchtungseinrichtung bereitzustellen,
wobei das erste Steuermittel dazu eingerichtet ist, das erste Steuersignal in Abhängigkeit von dem zumindest einem zweiten Steuersignal derart bereitzustellen, dass die Abtastrate der zumindest einen Kamera und die Pulsweitenmodulation der zumindest einen Beleuchtungseinrichtung synchronisiert sind.

Weiter wird ein Kabinen-Managementsystem für ein Luft- oder Raumfahrzeug vorgeschlagen, das eine wie oben erläuterte Steuervorrichtung hat, welche mit einer Mehrzahl von Kameras mittels eines ersten Busses und mit einer Mehrzahl von Beleuchtungseinrichtungen mittels eines zweiten Busses koppelbar ist.

Des Weiteren wird ein Verfahren zum Steuern zumindest einer Kamera für eine Kabine eines Luft- oder Raumfahrzeuges vorgeschlagen, das folgende Schritte hat:
Bereitstellen eines ersten Steuersignals mittels eines ersten Steuermittels zum Ansteuern zumindest einer Kamera der Kabine zur Einstellung einer Abtastrate der zumindest einen Kamera in Abhängigkeit von zumindest einem zweiten Steuersignal eines zweiten Steuermittels zum Ansteuern zumindest einer Beleuchtungseinrichtung der Kabine zur Einstellung einer Pulsweitenmodulation der zumindest einen Beleuchtungseinrichtung; und
Ansteuern der zumindest einen Kamera mittels des bereitgestellten zumindest einen ersten Steuersignals derart, dass die Abtastrate der zumindest einen Kamera und die Pulsweitenmodulation der zumindest einen Beleuchtungseinrichtung synchronisiert sind.

Ein Vorteil der vorliegenden Erfindung liegt darin, dass das erste Steuersignal zum Steuern der Kameras in Abhängigkeit des zweiten Steuersignals zum Ansteuern der Beleuchtungseinrichtung generiert wird. Durch diese Abhängigkeit können durch die Ansteuerung der Beleuchtungseinrichtung potenziell verursachbare Störungen bei der Aufnahme oder Abtastungen durch die Kamera oder die Kameras vermieden werden.

In den Unteransprüchen finden sich vorteilhafte Ausgestaltungen und Verbesserungen der Erfindung.

Gemäß einer bevorzugten Ausgestaltung stellt das erste Steuermittel das erste Steuersignal in Abhängigkeit des zweiten Steuersignals derart bereitstellt, dass eine durch die Ansteuerung der Beleuchtungseinrichtung potenziell verursachbare Störung bei einer Aufnahme der Kamera vermieden wird.

Gemäß einer weiteren bevorzugten Ausgestaltung stellen das erste Steuermittel und das zweite Steuermittel das erste Steuersignal und das zweite Steuersignal derart bereit, dass die Abtastrate als ein Nicht-Vielfaches der Frequenz der Pulsweitenmodulation ausgebildet ist.

Gemäß einer weiteren bevorzugten Ausgestaltung bildet das zweite Steuermittel das zweite Steuersignal mit einem ersten Signalanteil und einem zweiten Signalanteil aus. Der erste Signalanteil ist dazu geeignet, eine Frequenz der Pulsweitenmodulation zur Einstellung einer Lichtmenge des durch die zumindest eine Beleuchtungseinrichtung abgestrahlten Lichtes einzustellen. Weiterhin ist der zweite Signalanteil dazu geeignet, einen Farbvektor zur Einstellung einer Farbe des durch die zumindest eine Beleuchtungseinrichtung abgestrahlten Lichtes für die zumindest eine Beleuchtungseinrichtung einzustellen.

Gemäß einer weiteren bevorzugten Ausgestaltung hat die jeweilige Kamera zumindest ein Filtermittel zur Kompensation einer nicht-linearen Farbcharakteristik der Kamera.

Gemäß einer weiteren bevorzugten Ausgestaltung ist das zweite Steuermittel dazu eingerichtet, das jeweilige Filtermittel der jeweiligen Kamera mittels des zweiten Signalanteils des zweiten Steuersignals anzusteuern. Dieser zweite Signalanteil umfasst einen Farb-Kompensations-Vektor.

Das Licht der Beleuchtungseinrichtungen, insbesondere das Licht von LEDs, kann auch für farbige Lichteffekte, so genannte weiche Lichteffekte, genutzt werden. Die farbig beleuchtete Kabine hat, wie oben ausgeführt, auch Effekte auf die Aufnahmequalität der Kameras oder Videokameras aufgrund der nichtlinearen Farbcharakteristik der Kameras. Durch die Verwendung oben erwähnter Filter, insbesondere elektronischer Filter, kann eine solche nichtlineare Farbcharakteristik vorteilhafterweise kompensiert werden. Diese Farbkompensation wird insbesondere durch ein Referenzsignal, dem dritten Steuersignal, automatisch durchgeführt. Dieses dritte Steuersignal ist damit vorteilhafterweise dazu geeignet, die Generierung des ersten und zweiten Steuersignals zu steuern.

Gemäß einer weiteren bevorzugten Ausgestaltung bildet das zweite Steuermittel das zweite Steuersignal mit dem ersten Signalanteil, dem zweiten Signalanteil und einem dritten Signalanteil aus. Der dritte Signalanteil ist zum Umschalten zwischen einem Schwarz-Weiß-Modus und einem Farbmodus der jeweiligen Kamera geeignet.

Vorteilhafterweise kann in dunklen Umgebungen automatisch in den Schwarz-Weiß-Modus der Kameras geschaltet werden. Wird die dunkle Umgebung aufgrund einer Beleuchtung der Beleuchtungseinrichtung wieder heller, kann mittels des dritten Signalanteils auch automatisch in den Farbmodus zurückgeschaltet werden.

Gemäß einer weiteren bevorzugten Ausgestaltung ist ein drittes Mittel vorgesehen, welches dazu eingerichtet ist, die Kabine in verschiedene Beleuchtungszonen mit jeweils zumindest einer Beleuchtungseinrichtung einzuteilen und abhängig davon das erste Steuermittel und das zweite Steuermittel mittels eines dritten Steuersignals anzusteuern.

Die verschiedenen Beleuchtungszonen sind beispielsweise unterteilt in Erste Klasse, Business-Klasse, Economic-Klasse, Türbereich und dergleichen. Dabei ist das dritte Mittel vorzugsweise als Cabin Assignment Module (CAM) ausgestaltet. Gemäß einer weiteren bevorzugten Ausgestaltung ist das dritte Steuermittel mit einer Nachschlagtabelle zur Bereitstellung des dritten Steuersignals gekoppelt, welche Zuordnungen des ersten Steuersignals zu dem zweiten Steuersignal und zu der jeweiligen Beleuchtungseinrichtung oder zu der jeweiligen Beleuchtungszone speichert.

Gemäß einer weiteren bevorzugten Ausgestaltung stellen das erste Steuermittel und das zweite Steuermittel ein jeweiliges erstes Steuersignal und ein jeweiliges zweites Steuersignal in Abhängigkeit des dritten Steuersignals für die entsprechende Beleuchtungszone bereit.

Gemäß einer weiteren bevorzugten Ausgestaltung hat die jeweilige Beleuchtungseinrichtung eine Mehrzahl jeweils farbspezifischer Leuchtdioden.

Gemäß einer weiteren bevorzugten Ausgestaltung hat die jeweilige Kamera eine Mehrzahl jeweiliger farbspezifischer Sensoren aufweist.

Gemäß einer weiteren bevorzugten Ausgestaltung bilden das erste Steuermittel und das zweite Steuermittel das erste Steuersignal und das zweite Steuersignal derart aus, dass das Einschalten einer jeweiligen farbspezifischen Leuchtdiode ein Einschalten des entsprechenden farbspezifischen Sensors triggert.
Beispielsweise kann dadurch die Belichtungszeit der Kameras individuell gesteuert werden, z.B. für auf Rot spezifische Sensoren kann eine längere Einschaltzeit eingestellt werden als für auf Blau spezifische Sensoren.

Das jeweilige Mittel, das erste bis dritte Steuermittel, kann hardwaretechnisch oder auch softwaretechnisch implementiert sein. Bei einer hardwaretechnischen Implementierung kann das jeweilige Mittel als Vorrichtung, zum Bespiel als Computer oder Mikroprozessor, Einrichtung oder auch als Teil eines Systems, zum Bespiel als Computer-System, ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: ein schematisches Blockschaltbild eines ersten Ausführungsbeispiels einer erfindungsgemäßen Steuervorrichtung;
- Fig. 2: ein schematisches Blockschaltbild eines zweiten Ausführungsbeispiels einer erfindungsgemäßen Steuervorrichtung; und
- Fig. 3: ein schematisches Ablaufdiagramm eines Ausführungsbeispiels eines Verfahrens zum Steuern zumindest einer Kamera für eine Kabine eines Luft- oder Raumfahrzeuges.

In den Figuren bezeichnen dieselben Bezugszeichen gleiche oder funktionsgleiche Komponenten, soweit nichts Gegenteiliges angegeben ist.

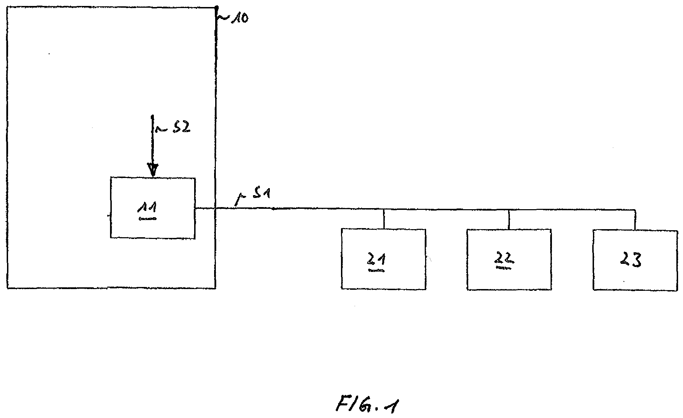

In Fig. 1 ist ein schematisches Blockschaltbild eines ersten Ausführungsbeispiels einer erfindungsgemäßen Steuervorrichtung 10 dargestellt.

Die Vorrichtung 10 hat ein erstes Steuermittel 11 zum Ansteuern zumindest einer Kamera 21-23. Die Steuervorrichtung 10 ist mit den Kameras 21-23 mittels eines ersten Busses 50 gekoppelt. Das erste Steuersignal S1 wird von der Steuervorrichtung 10, insbesondere dem ersten Steuermittel 11, über den Bus 50 an die Kameras 21-23 übertragen. Dabei ist das erste Steuermittel 11 dazu eingerichtet, das erste Steuersignal S1 in Abhängigkeit von zumindest einem zweiten Steuersignal S2 zum Ansteuern zumindest einer Beleuchtungseinrichtung 31-33 der Kabine bereitzustellen oder zu generieren. Weiter wird das erste Steuersignal S1 derart generiert, dass eine durch die Ansteuerung der Beleuchtungseinrichtung 31-33 oder Beleuchtungseinrichtungen potenziell verursachbare Störung bei einer Aufnahme durch die jeweilige Kamera 21-23 vermieden wird.

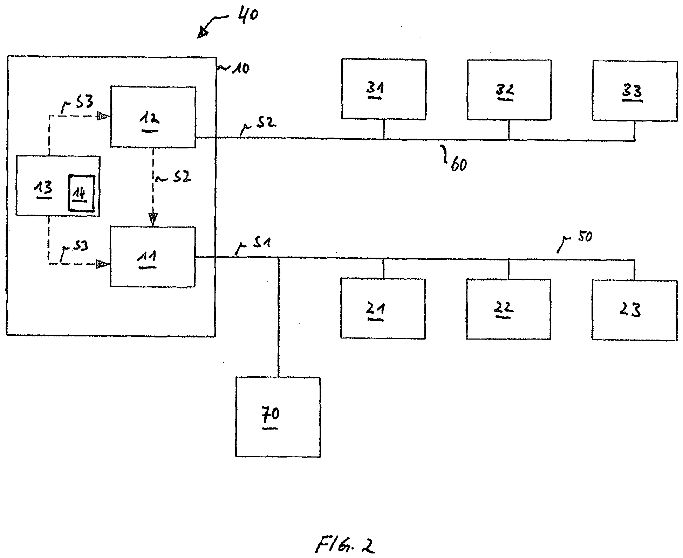

Fig. 2 zeigt ein schematisches Blockschaltbild eines zweiten Ausführungsbeispiel einer erfindungsgemäßen Steuervorrichtung 10. Die erfindungsgemäße Steuervorrichtung 10 nach Fig. 2 weist ein erstes Steuermittel 11, ein zweites Steuermittel 12 und ein drittes Steuermittel 13 auf. Die Steuervorrichtung 10 ist beispielsweise als CIDS-Director ausgebildet. Das erste Steuermittel 11 ist beispielsweise als Video-Controller ausgebildet. Das zweite Steuermittel 12 ist beispielsweise eine Cabin Illumination Application. Weiter ist das dritte Steuermittel 13 vorzugsweise ein Cabin Assignment Module. Des Weiteren kann die erfindungsgemäße Steuervorrichtung 40 Teil des Kabinen-Managementsystems (CIDS) sein.

Das zweite Ausführungsbeispiel gemäß Fig. 2 weist sämtliche Merkmale des ersten Ausführungsbeispiels nach Fig. 1 auf, welche hiermit zur Vermeidung von Wiederholungen nicht erneut erläutert werden.

Somit wird insbesondere die Funktion des ersten Steuermittels 11 nicht erneut ausgeführt.

Das zweite Steuermittel 12 ist zum Ansteuern der Beleuchtungseinrichtungen 31-33 in der Kabine geeignet. Dazu ist das zweite Steuermittel 12 mittels eines zweiten Busses 60 mit den Beleuchtungseinrichtungen 31-33 gekoppelt. Die jeweilige Beleuchtungseinrichtung 31-33 kann als eine LED, eine Anordnung einer Mehrzahl von LEDs oder als Leuchtstoffröhre ausgebildet sein. Bei der Ausbildung als Anordnung einer Mehrzahl von LEDs können die LEDs auch als verschiedenfarbige LEDs ausgebildet sein.

Vorzugsweise sind das erste Steuermittel 11 und das zweite Steuermittel 12 dazu eingerichtet, das erste Steuersignal S1 zur Einstellung der Abtastrate der Kameras 21-23 und das zweite Steuersignal zur Einstellung der Pulsweitenmodulation der Beleuchtungseinrichtungen 31-33 derart bereitzustellen, dass die Abtastrate und die Pulsweitenmodulation synchronisiert sind. Insbesondere ist die Abtastrate dabei ein Nicht-Vielfaches der Frequenz der Pulsweitenmodulation.

Des Weiteren bildet das zweite Steuermittel 12 das zweite Steuersignal S2 mit einem ersten Signalanteil und einem zweiten Signalanteil aus. Das erste Signalanteil ist dabei dazu geeignet, eine Frequenz der Pulsweitenmodulation zur Einstellung einer Lichtmenge, insbesondere der Helligkeit, des durch die Beleuchtungseinrichtungen 31-33 abgestrahlten Lichtes einzustellen. Dahingegen ist der zweite Signalanteil insbesondere dazu geeignet, einen Farbvektor zur Einstellung der Farbe des durch die Beleuchtungseinrichtungen 31-33 abgestrahlten Lichtes einzustellen.

Wie oben bereits ausgeführt, kann die jeweilige Kamera 21-23 ein Filtermittel, insbesondere ein elektronisches Filter, zur Kompensation einer nichtlinearen Farbcharakteristik aufweisen. In einem solchen Fall ist das zweite Steuermittel 12 vorzugsweise dazu eingerichtet, das jeweilige Filtermittel mittels des zweiten Signalanteils des zweiten Steuersignals S2 anzusteuern. Dann umfasst der zweite Signalanteil vorzugsweise einen Farb-Kompensationsvektor zur Kompensation oben erwähnter nicht-linearer Farbcharakteristik.

Des Weiteren kann das zweite Steuermittel 12 das zweite Steuersignal S2 mit einem weiteren Signalanteil ausbilden. Der weitere Signalanteil ist insbesondere zum Umschalten zwischen einem Schwarz-Weiß-Modus und einem Farbmodus der jeweiligen Kamera 21-23 geeignet.

Wie oben bereits ausgeführt, ist das dritte Steuermittel 13, das Cabin Assignment Module, dazu eingerichtet, die Kabine in verschiedenen Beleuchtungszonen mit jeweils mehreren Beleuchtungseinrichtungen 21-23 einzuteilen. Abhängig davon steuert das dritte Steuermittel 13 das erste Steuermittel 11 und das zweite Steuermittel 12 mittels eines dritten Steuersignals S3 an. Des Weiteren ist das dritte Steuermittel 13 vorzugsweise mit einer Nachschlagtabelle 14 zur Bereitstellung dieses dritten Steuersignals S3 gekoppelt. Weiter kann die Nachschlagtabelle 14 auch Teil des dritten Steuermittels 13 sein, wie in Fig. 2 gezeigt. Die Nachschlagtabelle 14 speichert Zuordnungen des ersten Steuersignals S1 zu dem zweiten Steuersignal S2 und zu der jeweiligen Beleuchtungseinrichtung 31-33 oder zur jeweiligen Beleuchtungszone. Es kann zu der jeweiligen Beleuchtungseinrichtung 31-33 bzw. zu den jeweiligen Beleuchtungszonen ein passendes Paar von ersten und zweiten Steuersignalen S1 und S2 bereitgestellt werden. In Abhängigkeit dieses dritten Steuersignals S3 stellen das erste Steuermittel 11 und das zweite Steuermittel 12 ein jeweiliges erstes Steuersignal S1 und ein jeweiliges zweites Steuersignal S2 bereit und übertragen diese über die Busse 50 und 60.

Zusammenfassend werden die Steuersignal S2 und S3 für das erste Steuermittel 11 bereitgestellt, welches in Abhängigkeit derer das erste Steuersignal S1 generiert. Die Kabinen-Videoüberwachungsanwendung (Cabin Video Monitoring Application) als erstes Steuermittel 11 der Steuervorrichtung 10 als CIDS-Director berechnet die Abtastrate den Farbkompensationsvektor und das Schwarz-Weiß-Modus-Umschaltsignal für die Kameras 21-23. Die drei Letztgenannten bilden das erste Steuersignal S1 aus. Die Berechnung dieses ersten Steuersignals S1 kann für die jeweiligen Kameras in jeder Beleuchtungszone individuell berechnet werden. Die Zuordnungen, welche Kameras in welcher Beleuchtungs- oder Kabinenzone angeordnet sind, sind in dem dritten Steuermittel 13, dem Cabin Assignment Module, abgespeichert. Die Kabinen-Videoüberwachungsapplikation sendet dieses erste Steuersignal S1 über den ersten Bus 50, insbesondere ein Kabinen-Videonetzwerk, an die Kameras 21-23. Die Kameras 21-23 empfangen das erste Steuersignal S1 und setzen in Abhängigkeit davon ihre Abtastrate, den Farbkompensationsfilter und den Schwarz-Weiß-Modus entsprechend. Die Kameras 21-23 nehmen dann die Videodatenrahmen mit der definierten Abtastrate auf, führen eine Datenverarbeitung mit dem definierten Filter durch und setzen dann den Schwarz-Weiß-Modus entsprechend. Letztendlich wird dieser Videodatenstrom zur Überwachung dem Flugbegleiterendgerät 70 und einem potenziellen Cockpit-Display bereitgestellt.

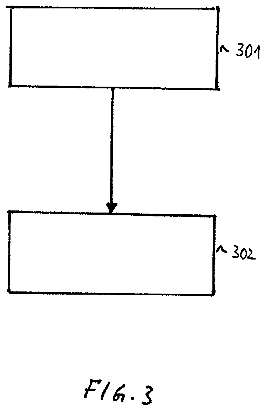

Weiter ist in Fig. 3 ein schematisches Ablaufdiagramm eines Ausführungsbeispiels des erfindungsgemäßen Verfahrens zum Steuern zumindest einer Kamera 21-23 für eine Kabine eines Luft- oder Raumfahrzeuges dargestellt.

Nachfolgend wird das Verfahren gemäß Fig. 3 unter Bezugnahme auf Fig. 1 näher erläutert.

Das Ausführungsbeispiel des Verfahrens gemäß Fig. 3 hat die Verfahrensschritte 301 und 302:

### Verfahrensschritt 301:

Ein erstes Steuersignal S1 für die zumindest eine Kamera 21-23 wird in Abhängigkeit von zumindest einem zweiten Steuersignal S2 bereitgestellt. Das zweite Steuersignal S2 ist zum Ansteuern zumindest einer Beleuchtungseinrichtung 31-33 der Kabine geeignet.

### Verfahrensschritt 302:

Die zumindest eine Kamera 21-23 wird mittels des bereitgestellten zumindest einen ersten Steuersignals S1 angesteuert.

### Bezugszeichenliste

- 10: Steuervorrichtung, insbesondere CIDS-Director
- 11: erstes Steuermittel, insbesondere Video-Controller
- 12: zweites Steuermittel, insbesondere Illumination Application
- 13: drittes Steuermittel, insbesondere Cabin Assignment Module
- 14: Nachschlagtabelle
- 21-23: Kamera
- 31-33: Beleuchtungseinrichtung
- 40: Kabinen-Managementsystem
- 50: Bus
- 60: Bus
- 70: Flugbegleiterendgerät, insbesondere Flight Attendant Panel
- S1: erstes Steuersignal
- S2: zweites Steuersignal
- S3: drittes Steuersignal
- 301, 302: Verfahrensschritt

## Patentansprüche

1. Steuervorrichtung (10) für eine Kabine eines Luft- oder Raumfahrzeuges, mit
einem ersten Steuermittel (11), welches dazu eingerichtet ist, zumindest ein erstes Steuersignal (S1) zum Ansteuern zumindest einer Kamera (21-23) der Kabine zur Einstellung einer Abtastrate der zumindest einen Kamera (21-23) bereitzustellen, und
einem zweiten Steuermittel (12), welches dazu eingerichtet ist, zumindest ein zweites Steuersignal (S2) zum Ansteuern zumindest einer Beleuchtungseinrichtung (31-33) der Kabine zur Einstellung einer Pulsweitenmodulation der zumindest einen Beleuchtungseinrichtung (31-33) bereitzustellen,
**dadurch gekennzeichnet, dass** das erste Steuermittel (11) dazu eingerichtet ist, das erste Steuersignal (S1) in Abhängigkeit von dem zumindest einen zweiten Steuersignal (S2) derart bereitzustellen, dass die Abtastrate der zumindest einen Kamera (21-23) und die Pulsweitenmodulation der zumindest einen Beleuchtungseinrichtung (31-33) synchronisiert sind.

2. Steuervorrichtung nach Anspruch 1,
**dadurch gekennzeichnet,**
**dass** das erste Steuermittel (11) das erste Steuersignal (S1) in Abhängigkeit des zweiten Steuersignals (S2) derart bereitstellt, dass eine durch die Ansteuerung der Beleuchtungseinrichtung (31-33) verursachbare Störung bei einer Aufnahme der Kamera (21-23) vermieden wird.

3. Vorrichtung nach einem der vorherigen Ansprüche,
**dadurch gekennzeichnet,**
**dass** das erste Steuermittel (11) und das zweite Steuermittel (12) das erste Steuersignal (S1) und das zweite Steuersignal (S2) derart bereitstellen, dass die Abtastrate als ein Nicht-Vielfaches der Frequenz der Pulsweitenmodulation ausgebildet ist.

4. Vorrichtung nach einem der Ansprüche 1 bis 3,
**dadurch gekennzeichnet,**
**dass** das zweite Steuermittel (12) das zweite Steuersignal (S2) mit einem ersten Signalanteil und einem zweiten Signalanteil ausbildet, wobei der erste Signalanteil dazu geeignet ist, eine Frequenz der Pulsweitenmodulation zur Einstellung einer Lichtmenge des durch die zumindest eine Beleuchtungseinrichtung (31-33) abgestrahlten Lichtes einzustellen, und wobei der zweite Signalanteil dazu geeignet ist, einen Farbvektor zur Einstellung einer Farbe des durch die zumindest eine Beleuchtungseinrichtung (31-33) abgestrahlten Lichtes für die zumindest eine Beleuchtungseinrichtung (31-33) einzustellen.

5. Vorrichtung nach Anspruch 1, umfassend die zumindest eine Kamera (21-23),
**dadurch gekennzeichnet,**
**dass** die jeweilige Kamera (21-23) zumindest ein Filtermittel zur Kompensation einer nicht-linearen Farbcharakteristik der Kamera (21-23) aufweist,
wobei das zweite Steuermittel (12) dazu eingerichtet ist, das jeweilige Filtermittel der jeweiligen Kamera (21-23) mittels des zweiten Signalanteils des zweiten Steuersignals (S2) anzusteuern, welcher einen Farb-Kompensations-Vektor umfasst.

6. Vorrichtung nach einem der Ansprüche 3 bis 5,
**dadurch gekennzeichnet,**
**dass** das zweite Steuermittel (12) das zweite Steuersignal (S2) mit dem ersten Signalanteil, dem zweiten Signalanteil und einem dritten Signalanteil ausbildet, wobei der dritte Signalanteil zum Umschalten zwischen einem Schwarz-Weiß-Modus und einem Farbmodus der jeweiligen Kamera (21-23) geeignet ist.

7. Vorrichtung nach einem der vorstehenden Ansprüche, **dadurch gekennzeichnet,**
**dass** ein drittes Steuermittel (13) vorgesehen ist, welches dazu eingerichtet ist, die Kabine in verschiedene Beleuchtungszonen mit jeweils zumindest einer Beleuchtungseinrichtung (21-23) einzuteilen und abhängig davon das erste Steuermittel (11) und das zweite Steuermittel (12) in Abhängigkeit eines dritten Steuersignals (S3) anzusteuern.

8. Vorrichtung nach Anspruch 7,
**dadurch gekennzeichnet,**
**dass** das dritte Steuermittel (13) mit einer Nachschlagtabelle (14) zur Bereitstellung des dritten Steuersignals (S3) gekoppelt ist, welche Zuordnungen des ersten Steuersignals (S1) zu dem zweiten Steuersignal (S2) und zu der jeweiligen Beleuchtungseinrichtung (31-33) oder zu der jeweiligen Beleuchtungszone speichert.

9. Vorrichtung nach Anspruch 7 oder 8,
**dadurch gekennzeichnet,**
**dass** das erste Steuermittel (11) und das zweite Steuermittel (12) ein jeweiliges erstes Steuersignal (S1) und ein jeweiliges zweites Steuersignal (S2) in Abhängigkeit des dritten Steuersignals (S3) für die entsprechende Beleuchtungszone bereitstellen.

10. Vorrichtung nach einem der vorstehenden Ansprüche, umfassend die zumindest eine Beleuchtungseinrichtung (31-33),
**dadurch gekennzeichnet,**
**dass** die jeweilige Beleuchtungseinrichtung (31-33) eine Mehrzahl jeweils farbspezifischer Leuchtdioden aufweist und die jeweilige Kamera (21-23) eine Mehrzahl jeweiliger farbspezifischer Sensoren aufweist.

11. Vorrichtung nach Anspruch 10,
**dadurch gekennzeichnet,**
**dass** das erste Steuermittel (11) und das zweite Steuermittel (12) das erste Steuersignal (S1) und das zweite Steuersignal (S2) derart ausbilden, dass das Einschalten einer jeweiligen farbspezifischen Leuchtdiode ein Einschalten des entsprechenden farbspezifischen Sensors triggert.

12. Kabinen-Managementsystem (40) für ein Luft- oder Raumfahrzeug, mit:
einer Steuervorrichtung (10) nach einem der vorstehenden Ansprüche, welche mit einer Mehrzahl von Kameras (21-23) mittels eines ersten Busses (50) und mit einer Mehrzahl von Beleuchtungseinrichtungen (31-33) mittels eines zweiten Busses (60) koppelbar ist.

13. Verfahren zum Steuern zumindest einer Kamera (21-23) für eine Kabine eines Luft- oder Raumfahrzeuges mit den Schritten:
Bereitstellen eines ersten Steuersignals (S1) mittels eines ersten Steuermittels (11) zum Ansteuern zumindest einer Kamera (21-23) der Kabine zur Einstellung einer Abtastrate der zumindest einen Kamera (21-23) in Abhängigkeit von zumindest einem zweiten Steuersignal (S2) eines zweiten Steuermittels (12) zum Ansteuern zumindest einer Beleuchtungseinrichtung (31-33) der Kabine zur Einstellung einer Pulsweitenmodulation der zumindest einen Beleuchtungseinrichtung (31-33); und
Ansteuern der zumindest einen Kamera (21-23) mittels des bereitgestellten zumindest einen ersten Steuersignals (S1) derart, dass die Abtastrate der zumindest einen Kamera (21-23) und die Pulsweitenmodulation der zumindest einen Beleuchtungseinrichtung (31-33) synchronisiert sind.

## Claims

1. Control device (10) for a cabin of an aircraft or spacecraft, having
a first control means (11) which is set up to provide at least one first control signal (S1) for controlling at least one camera (21-23) in the cabin for the purpose of setting a scanning rate of the at least one camera (21-23), and
a second control means (12) which is set up to provide at least one second control signal (S2) for controlling at least one lighting device (31-33) in the cabin for the purpose of setting pulse width modulation of the at least one lighting device (31-33),
**characterized in that**
the first control means (11) is set up to provide the first control signal (S1) on the basis of the at least one second control signal (S2) in such a manner that the scanning rate of the at least one camera (21-23) and the pulse width modulation of the at least one lighting device (31-33) are synchronized.

2. Control device according to Claim 1,
**characterized**
**in that** the first control means (11) provides the first control signal (S1) on the basis of the second control signal (S2) in such a manner that a disruption which can be caused by controlling the lighting device (31-33) is avoided in a recording of the camera (21-23).

3. Device according to either of the preceding claims,
**characterized**
**in that** the first control means (11) and the second control means (12) provide the first control signal (S1) and the second control signal (S2) in such a manner that the scanning rate is not a multiple of the pulse width modulation frequency.

4. Device according to one of Claims 1 to 3, **characterized**
**in that** the second control means (12) forms the second control signal (S2) with a first signal component and a second signal component, wherein the first signal component is suitable for setting a frequency of the pulse width modulation for the purpose of setting an amount of light emitted by the at least one lighting device (31-33), and wherein the second signal component is suitable for setting a colour vector for the at least one lighting device (31-33) for the purpose of setting a colour of the light emitted by the at least one lighting device (31-33).

5. Device according to Claim 1, comprising the at least one camera (21-23),
**characterized**
**in that** the respective camera (21-23) has at least one filter means for compensating for a non-linear colour characteristic of the camera (21-23), wherein the second control means (12) is set up to control the respective filter means of the respective camera (21-23) by means of the second signal component of the second control signal (S2) which comprises a colour compensation vector.

6. Device according to one of Claims 3 to 5, **characterized**
**in that** the second control means (12) forms the second control signal (S2) with the first signal component, the second signal component and a third signal component, wherein the third signal component is suitable for changing over between a black-and-white mode and a colour mode of the respective camera (21-23).

7. Device according to one of the preceding claims, **characterized**
**in that** a third control means (13) is provided and is set up to divide the cabin into different lighting zones each with at least one lighting device (21-23) and, on the basis thereof, to control the first control means (11) and the second control means (12) on the basis of a third control signal (S3).

8. Device according to Claim 7,
**characterized**
**in that** the third control means (13) is coupled to a lookup table (14) for providing the third control signal (S3), which lookup table stores assignments of the first control signal (S1) to the second control signal (S2) and to the respective lighting device (31-33) or to the respective lighting zone.

9. Device according to Claim 7 or 8,
**characterized**
**in that** the first control means (11) and the second control means (12) provide a respective first control signal (S1) and a respective second control signal (S2) on the basis of the third control signal (S3) for the corresponding lighting zone.

10. Device according to one of the preceding claims, comprising the at least one lighting device (31-33),
**characterized**
**in that** the respective lighting device (31-33) has a plurality of respectively colour-specific light-emitting diodes and the respective camera (21-23) has a plurality of respective colour-specific sensors.

11. Device according to Claim 10,
**characterized**
**in that** the first control means (11) and the second control means (12) form the first control signal (S1) and the second control signal (S2) in such a manner that the switching-on of a respective colour-specific light-emitting diode triggers switching-on of the corresponding colour-specific sensor.

12. Cabin management system (40) for an aircraft or spacecraft, having:
a control device (10) according to one of the preceding claims which can be coupled to a plurality of cameras (21-23) by means of a first bus (50) and to a plurality of lighting devices (31-33) by means of a second bus (60).

13. Method for controlling at least one camera (21-23) for a cabin of an aircraft or spacecraft, having the steps of:
providing a first control signal (S1) by means of a first control means (11) for controlling at least one camera (21-23) in the cabin for the purpose of setting a scanning rate of the at least one camera (21-23) on the basis of at least one second control signal (S2) from a second control means (12) for controlling at least one lighting device (31-33) in the cabin for the purpose of setting pulse width modulation of the at least one lighting device (31-33); and
controlling the at least one camera (21-23) by means of the provided at least one first control signal (S1) in such a manner that the scanning rate of the at least one camera (21-23) and the pulse width modulation of the at least one lighting device (31-33) are synchronized.

## Revendications

1. Arrangement de commande (10) pour une cabine d'un aéronef ou d'un véhicule spatial, comprenant un premier moyen de commande (11), qui est conçu pour fournir au moins un premier signal de commande (S1) destiné à piloter au moins une caméra (21-23) de la cabine en vue de régler une fréquence d'échantillonnage de l'au moins une caméra (21-23), et
un deuxième moyen de commande (12), qui est conçu pour fournir au moins un deuxième signal de commande (S2) destiné à exciter au moins un dispositif d'éclairage (31-33) de la cabine en vue de régler une modulation d'impulsions en largeur de l'au moins un dispositif d'éclairage (31-33),
**caractérisé en ce que**
le premier moyen de commande (11) est conçu pour fournir le premier signal de commande (S1) en fonction de l'au moins un deuxième signal de commande (S2) de telle sorte que la fréquence d'échantillonnage de l'au moins une caméra (21-23) et la modulation d'impulsions en largeur de l'au moins un dispositif d'éclairage (31-33) sont synchronisées.

2. Arrangement de commande selon la revendication 1, **caractérisé en ce que** le premier moyen de commande (11) fournit le premier signal de commande (S1) en fonction du deuxième signal de commande (S2) de telle sorte qu'une perturbation lors d'un enregistrement par la caméra (21-23), pouvant être provoquée par l'excitation du dispositif d'éclairage (31-33), est évitée.

3. Arrangement selon l'une des revendications précédentes, **caractérisé en ce que** le premier moyen de commande (11) et le deuxième moyen de commande (12) fournissent le premier signal de commande (S1) et le deuxième signal de commande (S2) de telle sorte que la fréquence d'échantillonnage est formée sous la forme d'un non-multiple de la fréquence de la modulation d'impulsions en largeur.

4. Arrangement selon l'une des revendications 1 à 3, **caractérisé en ce que** le deuxième moyen de commande (12) configure le deuxième signal de commande (S2) avec une première composante de signal et une deuxième composante de signal, la première composante de signal étant adaptée pour régler une fréquence de la modulation d'impulsions en largeur destinée à régler une quantité de lumière de la lumière émise par l'au moins un dispositif d'éclairage (31-33), et la deuxième composante de signal étant adaptée pour régler un vecteur de couleur destiné à régler une couleur de la lumière émise par l'au moins un dispositif d'éclairage (31-33) pour l'au moins un dispositif d'éclairage (31-33) .

5. Arrangement selon la revendication 1, comprenant l'au moins une caméra (21-23), **caractérisé en ce que** la caméra (21-23) respective possède au moins un moyen de filtrage destiné à compenser une caractéristique de couleur non linéaire de la caméra (21-23), le deuxième moyen de commande (12) étant conçu pour piloter le moyen de filtrage respectif de la caméra (21-23) respective au moyen de la deuxième composante de signal du deuxième signal de commande (S2), laquelle comporte un vecteur de compensation de couleur.

6. Arrangement selon l'une des revendications 3 à 5, **caractérisé en ce que** le deuxième moyen de commande (12) configure le deuxième signal de commande (S2) avec la première composante de signal, la deuxième composante de signal et une troisième composante de signal, la troisième composante de signal étant adaptée pour permuter entre un mode noir et blanc et un mode couleur de la caméra (21-23) respective.

7. Arrangement selon l'une des revendications précédentes, **caractérisé en ce qu'**un troisième moyen de commande (13) est présent, lequel est conçu pour diviser la cabine en différentes zones d'éclairage avec respectivement au moins un dispositif d'éclairage (21-23) et piloter en fonction de cela le premier moyen de commande (11) et le deuxième moyen de commande (12) en fonction d'un troisième signal de commande (S3).

8. Arrangement selon la revendication 7, **caractérisé en ce que** le troisième moyen de commande (13) est couplé à une table de consultation (14) destinée à fournir le troisième signal de commande (S3), laquelle mémorise des associations du premier signal de commande (S1) au deuxième signal de commande (S2) et au dispositif d'éclairage (31-33) respectif ou à la zone d'éclairage respective.

9. Arrangement selon la revendication 7 ou 8, **caractérisé en ce que** le premier moyen de commande (11) et le deuxième moyen de commande (12) fournissent un premier signal de commande (S1) respectif et un deuxième signal de commande (S2) respectif pour la zone d'éclairage correspondante en fonction du troisième signal de commande (S3).

10. Arrangement selon l'une des revendications précédentes, comprenant l'au moins un dispositif d'éclairage (31-33), **caractérisé en ce que** le dispositif d'éclairage (31-33) respectif possède une pluralité de diodes électroluminescentes respectivement spécifiques à une couleur et la caméra (21-23) respective possède une pluralité de capteurs respectifs spécifiques à une couleur.

11. Arrangement selon la revendication 10, **caractérisé en ce que** le premier moyen de commande (11) et le deuxième moyen de commande (12) configurent le premier signal de commande (S1) et le deuxième signal de commande (S2) de telle sorte que la mise en circuit d'une diode électroluminescente respective spécifique à une couleur déclenche la mise en circuit du capteur spécifique à une couleur respectif.

12. Système de gestion de cabine (40) pour un aéronef ou un véhicule spatial, comprenant : un arrangement de commande (10) selon l'une des revendications précédentes, lequel peut être connecté à une pluralité de caméras (21-23) au moyen d'un premier bus (50) et à une pluralité de dispositifs d'éclairage (31-33) au moyen d'un deuxième bus (60).

13. Procédé de commande d'au moins une caméra (21-23) pour une cabine d'un aéronef ou d'un véhicule spatial, comprenant les étapes suivantes :
fourniture d'un premier signal de commande (S1) au moyen d'un premier moyen de commande (11) destiné à piloter au moins une caméra (21-23) de la cabine en vue de régler une fréquence d'échantillonnage de l'au moins une caméra (21-23) en fonction d'au moins un deuxième signal de commande (S2) d'un deuxième moyen de commande (12) destiné à exciter au moins un dispositif d'éclairage (31-33) de la cabine en vue de régler une modulation d'impulsions en largeur de l'au moins un dispositif d'éclairage (31-33) ; et
pilotage de l'au moins une caméra (21-23) au moyen de l'au moins un premier signal de commande (S1) fourni de telle sorte que la fréquence d'échantillonnage de l'au moins une caméra (21-23) et la modulation d'impulsions en largeur de l'au moins un dispositif d'éclairage (31-33) sont synchronisées.
